# EUROPEAN PATENT APPLICATION

(11) **EP 1 814 116 A1**
(43) Date of publication of application: **01.08.2007**
(21) Application number: 07001064.0
(22) Date of filing: 18.01.2007
(51) Int. Cl.: G11B 23/03

(54) **Photosensitive recording medium cartridge**

(30) Priority: 20.01.2006 JP 2006013000
(71) Applicant: Fujifilm Corporation, Minato-ku Tokyo (JP)
(72) Inventor: Asakura, Katsuyoshi, Minato-ku Tokyo (JP); Takahashi, Tomoyuki, Minato-ku Tokyo (JP)
(74) Representative: Grünecker, Kinkeldey, Stockmair & Schwanhäusser Anwaltssozietät

(57) **Abstract**

A cartridge (2) including: a photosensitive recording medium (4); a cartridge body (11) including a disc receiving portion for receiving the photosensitive recording medium (4) rotatably, an opening portion formed in a side surface (11c) in a direction of insertion, a light-shield plate mounting surface provided on an outer surface, and an inner opening for exposing a center and a recording surface of the photosensitive recording medium (4) to an outside; a light-shield plate (12) inserted from the side surface (11c) of the cartridge body on the opening portion side and mounted onto the light-shield plate mounting surface; and a lid (21) which is fixed to the side surface of the cartridge body (11) so as to close the opening portion and fix the light-shield plate (12) to the cartridge body (11).

## Description

### FIELD OF THE INVENTION

The present invention relates to a photosensitive recording medium cartridge. Particularly, it relates to a photosensitive recording medium cartridge with improvement of light-shielding characteristic and improvement of assembling characteristic due to reduction in number of parts.

### BACKGROUND OF THE INVENTION

A holographic recording medium for recording data holographically has been invented (e.g. see JP-A-2004-029476). The holographic recording medium is a photosensitive recording medium having a disc-shaped support, and holographic recording layers made of photosensitive material and provided on the support. Data are multilayer-recorded as interference fringes of laser light, so that a data recording capacity larger than that of a heretofore popularized recording medium DVD can be obtained. Because there is a bad influence on the performance of the holographic recording medium when the holographic recording layers are exposed to light or dust is deposited on the holographic recording layers, the holographic recording medium is used in a state where the holographic recording medium is stored in a cartridge having a light-shielding function and a dust-preventing function (e.g. see JP-A-2003-317422 (corresponding to US 2003/0198177 A1)).

As the cartridge for receiving the disc-shaped recording medium, there is known a cartridge having a cartridge body provided with an opening for exposing the disc-shaped recording medium to the outside, and a shutter for opening/closing the opening (e.g. see JP-A-7-210912) or a cartridge further having a light-shield plate (shutter cover) on the outside of the shutter (e.g. see JP-A-2001-216754 (corresponding to US 2001/0010680 A1)).

In the invention described in JP-A-2004-029476, the holographic recording medium is stored in a cartridge similar to a DVD-RAM cartridge. This cartridge is made of a material low in transmittance of light rays in a wavelength range exerting influence on the holographic recording layers. Although JP-A-2004-029476 gives no description about the detailed configuration of the cartridge, it can be conceived that the cartridge has the same configuration as that of the cartridge described in JP-A-2003-317422 (corresponding to US 2003/0198177 A1).

In the invention described in JP-A-2003-317422 (corresponding to US 2003/0198177 A1), the cartridge is made of a material shielding light with sensitive colors of the holographic recording layers. A sponge-like light-shield material is attached to a joint of movable portions for exposing the holographic recording medium to the outside. Moreover, there is description about a cartridge having a cartridge body for rotatably receiving a recording medium, an opening provided in the cartridge body for exposing part of the recording medium to the outside, and a shutter for opening/closing the opening.

In the invention described in JP-A-7-210912, there is description about a cartridge mainly aiming at receiving an opto-magnetic disc. An open drive recess is provided in an extension portion extended in a shutter-closing direction from a shutter. A shutter opening member provided in a recording/reproducing apparatus with the cartridge inserted therein is fitted into the open drive recess to thereby open/close the shutter.

In the invention described in JP-A-2001-216754 (corresponding to US 2001/0010680 A1), there is description about a cartridge having a shutter, a slide member fixed to the shutter, and a light-shield plate provided on the outside of the shutter. The shutter is opened/closed through the slide member.

### SUMMARY OF THE INVENTION

In the cartridge for receiving the holographic recording medium, if both light shielding and dust prevention are not appropriately made between the cartridge body and the shutter, light or dust entering the cartridge exerts a bad influence on the holographic recording medium. In JP-A-2004-029476, however, there is no description about the light-shielding and dust-preventing structure between the cartridge body and the shutter.

In each of the cartridges described in JP-A-2003-317422 (corresponding to US 2003/0198177 A1), JP-A-7-210912 and JP-A-2001-216754 (corresponding to US 2001/0010680 A1), the shutter is attached to the shutter slide surface offset inward and provided on the outer surface of the cartridge. Because a difference in level is formed between each side of the shutter slide surface and the outer surface, it is general that the shutter is attached in such a manner that the shutter is pressed from the front to the rear in the inserting direction while opposite surfaces of the cartridge are clamped. On this occasion, the shutter approximately U-shaped in sectional view would probably be deformed because the shutter is inserted while pressed so as to be widened. As a result, when the recording medium is a photosensitive recording medium such as a holographic recording medium, there is a possibility that even slight deformation of the shutter causes lowering of light-shielding characteristic to thereby expose the photosensitive recording medium to light.

Moreover, each of the cartridges described in JP-A-2003-317422 (corresponding to US 2003/0198177 A1) and JP-A-7-210912 has no light-shield plate. Because light is shielded by only the shutter, the light-shielding characteristic of the cartridge for receiving the photosensitive recording medium is not always sufficient. In this respect, there is room for improvement. Moreover, because the shutter is directly exposed to the outside, the shutter may be opened by mistake or the shutter may be deformed when large external force acts on the shutter. There is a possibility that the holographic recording medium cannot be used because the holographic recording medium has been already exposed to light.

In the cartridge described in JP-A-2001-216754 (corresponding to US 2001/0010680 A1), a light-shield plate is disposed on the outside of the shutter to improve light-shielding characteristic. Because the cartridge described in JP-A-2001-216754 (corresponding to US 2001/0010680 A1) is provided for a single-side recording type recording medium, the light-shield plate is fixed to the cartridge body by an adhesive tape. Although it may be necessary to mend the light-shield plate for position correction etc., the light-shield plate shaped like a thin plate would probably be deformed when the light-shield plate is separated from the adhesive tape in the fixation using the adhesive tape. There is a problem that the light-shield plate separated from the adhesive tape cannot be reused. There is another problem that production efficiency is poor.

In the case of a double-side recording type recording medium, the light-shield plate is approximately U-shaped in sectional view. There is a possibility that the light-shield plate may be deformed at the time of mounting the light-shield plate because the light-shield plate must be inserted while pressed so as to be widened in the same manner as the shutter. Accordingly, there is a possibility that light-shielding characteristic deteriorates. In some case, the light-shield plate is screwed to the cartridge body to eliminate the influence on deformation of the light-shield plate to thereby keep light-shielding characteristic. In this case, there is however a possibility that light may enter the recording medium through a gap in the marginal portion of the light-shield plate. Accordingly, there is a possibility that light-shielding characteristic is not always sufficient. In addition, assembling characteristic becomes poor with increase in number of parts such as screws. There is room for improvement.

The present invention is accomplished upon such circumstances. An object of the invention is to provide a photosensitive recording medium cartridge in which: light-shielding characteristic is improved; and the number of screwing points is reduced so that the number of parts can be reduced while the number of assembling steps can be reduced.

The foregoing object of the invention is achieved by a photosensitive recording medium cartridge described below.
(1) A photosensitive recording medium cartridge having: a photosensitive recording medium; a cartridge body including a disc receiving portion for receiving the photosensitive recording medium rotatably, an opening portion formed in a side surface in a direction of insertion, a light-shield plate mounting surface formed on an outer surface, and an inner opening for exposing a center and a recording surface of the photosensitive recording medium to the outside; a light-shield plate inserted from the side surface of the cartridge body on the opening portion side and mounted onto the light-shield plate mounting surface; and a lid which is fixed to the side surface of the cartridge body to thereby close the opening portion and fix the light-shield plate to the cartridge body.

According to the photosensitive recording medium cartridge configured as described above, an opening portion is provided in a side surface of the cartridge body and a light-shield plate mounting surface is formed on the outer surface of the cartridge body. After a light-shield plate is inserted from the side surface on the opening portion side and mounted onto the light-shield plate mounting surface, a lid is attached to the opening portion. As a result, the opening portion is closed and the light-shield plate is fixed to the lid and the cartridge body. Because it is unnecessary to insert the light-shield plate from the front in the cartridge-inserting direction while opening the light-shield plate in the background-art manner when the light-shield plate is fitted to the light-shield plate mounting surface, the light-shield plate can be attached to the cartridge body without any deformation to thereby prevent lowering of light-shielding characteristic from being caused by deformation of the light-shield plate. Moreover, because the opening portion is covered with the lid, the opening portion can be blocked by the lid to keep good light-shielding characteristic and improve assembling characteristic even if dimensional error or assembling error of two shells constituting the cartridge body causes a slight gap between the two shells.
(2) A photosensitive recording medium cartridge according to the paragraph (1), wherein: the light-shield plate mounting surface has an abutment portion on which a marginal portion of the light-shield plate abuts, and a light-shield plate receiving groove provided in the abutment portion so that the marginal portion is fitted into the light-shield plate receiving groove; the lid has a lid groove portion into which the marginal portion of the light-shield plate disposed on the opening portion side is fitted; and the light-shield plate is fixed in such a manner that the marginal portion of the light-shield plate is fitted into the light-shield plate receiving groove and the lid groove portion.

According to the photosensitive recording medium cartridge configured as described above, a light-shield plate receiving groove is formed in the light-shield plate mounting surface so that the marginal portion of the light-shield plate can be fitted into the light-shield plate receiving groove. Moreover, a lid groove portion is formed in the lid so that the marginal portion of the light-shield plate disposed on the opening portion side is fitted into the lid groove portion. Because the light-shield plate is fixed in such a manner that the marginal portion of the light-shield plate is fitted into the light-shield plate receiving groove and the lid groove portion, a labyrinth formed from the marginal portion and the light-shield plate receiving groove and from the marginal portion and the lid groove portion is provided in a joint portion among the light-shield plate, the cartridge body and the lid. Accordingly, light from the marginal portion of the light-shield plate can be blocked so surely that light-shielding characteristic can be improved.

Moreover, because the light-shield plate is fixed in such a manner that the marginal portion of the light-shield plate is fitted into the light-shield plate receiving groove and the lid groove portion, a predetermined gap is kept between the light-shield plate and the cartridge body without flapping of the photosensitive recording medium cartridge in the direction of thickness. Thus, the shutter can slide on the shutter slide surface without any obstacle so that the operability of the shutter can be ensured. Moreover, because the light-shield plate can be fixed without use of any screw etc. at the same time when the lid is fixed to the opening portion of the cartridge body, the number of parts can be reduced and the number of assembling steps can be reduced. In addition, because there is no screw head exposed to the outside, the external appearance of the photosensitive recording medium cartridge is improved.
(3) A photosensitive recording medium cartridge according to the paragraph (1) or (2), wherein the lid is formed so as to be longer than the marginal portion on the opening portion side.

According to the photosensitive recording medium cartridge configured as described above, light can be surely prevented from penetrating through corner portions of the light-shield plate on the opening portion side, because the lid is formed so as to be longer than the marginal portion of the light-shield plate fitted to the lid. Accordingly, light-shielding characteristic can be improved.
(4) A photosensitive recording medium cartridge according to any one of the paragraphs (1) through (3), wherein the light-shield plate mounting surface has a shutter slide surface which is offset inward so that a shutter is movably disposed between a closed position for closing the inner opening and an opened position for opening the inner opening.

According to the photosensitive recording medium cartridge configured as described above, the shutter can be moved smoothly between the light-shield plate and the cartridge body because a shutter slide surface offset inward for movably disposing the shutter between a closed position for closing the inner opening and an opened position for opening the inner opening is formed on the light-shield plate mounting surface.
(5) A photosensitive recording medium cartridge according to any one of the paragraphs (1) through (4), wherein the photosensitive recording medium is a holographic recording medium.

According to the photosensitive recording medium cartridge configured as described above, the photosensitive recording medium cartridge for receiving a holographic recording medium can be produced easily and inexpensively.

In the photosensitive recording medium cartridge according to the invention, while an opening portion is provided in a side surface of a cartridge body, light-shield plate mounting surfaces having light-shield plate receiving grooves are formed on the outer surface of the cartridge body. After a light-shield plate is inserted from the side surface on the opening portion side and mounted onto the light-shield plate mounting surfaces, a lid is attached to the opening portion. On this occasion, the marginal portion of the light-shield plate is fitted and fixed into the light-shield plate receiving grooves of the cartridge body and the lid groove portion provided in the lid. Accordingly, it is possible to provide the photosensitive recording medium cartridge in which: light-shielding characteristic is improved; and the number of screwing points is reduced so that the number of parts can be reduced while the number of assembling steps can be reduced.

### BRIEF DESCRIPTION OF THE DRAWINGS

Fig. 1 is a perspective view showing the external appearance of a cartridge according to the invention.
Fig. 2 is a perspective view showing an opposite surface of the cartridge.
Fig. 3 is an exploded perspective view showing the configuration of the cartridge.
Figs. 4A, 4B and 4C are sectional views taken along the line IV-IV in Fig. 1, Fig. 4A being a sectional view showing the whole of the cartridge, Fig. 4B being an enlarged sectional view showing a front end marginal portion of the cartridge, Fig. 4C being an enlarged sectional view showing a rear end marginal portion of the cartridge.
Fig. 5 is an enlarged exploded perspective view showing important part of the cartridge in a state where a shutter and a light-shield plate have been removed.
Fig. 6 is a sectional view taken along the line VI-VI in Fig. 1.
Fig. 7 is a sectional view taken along the line VII-VII in Fig. 1.
Figs. 8A and 8B are sectional views taken along the line VIII-VIII in Fig. 1.
Fig. 9 is a plan view from the arrow IX in Fig. 1.
Fig. 10 is an exploded perspective view showing the configuration of a lock mechanism.
Fig. 11 is an exploded perspective view showing an example of various mechanisms for opening the shutter.
Figs. 12A, 12B and 12C are views for explaining the operation of the lock mechanism.

### DETAILED DESCRIPTION OF THE INVENTION

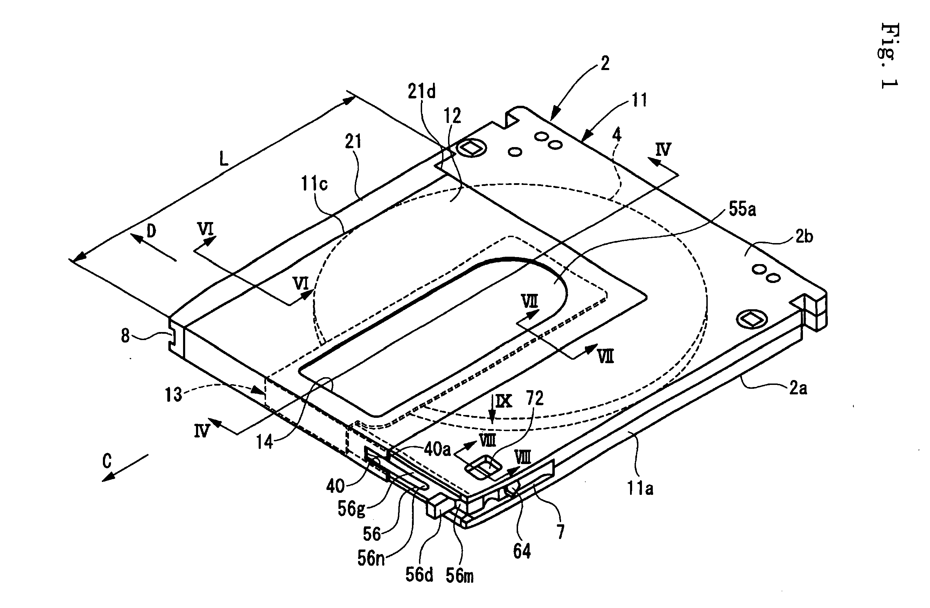

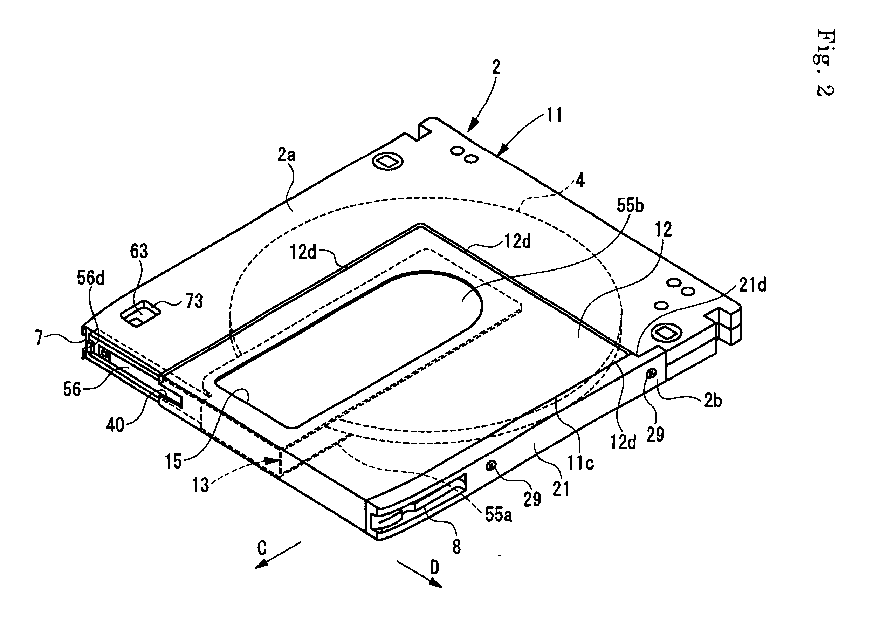

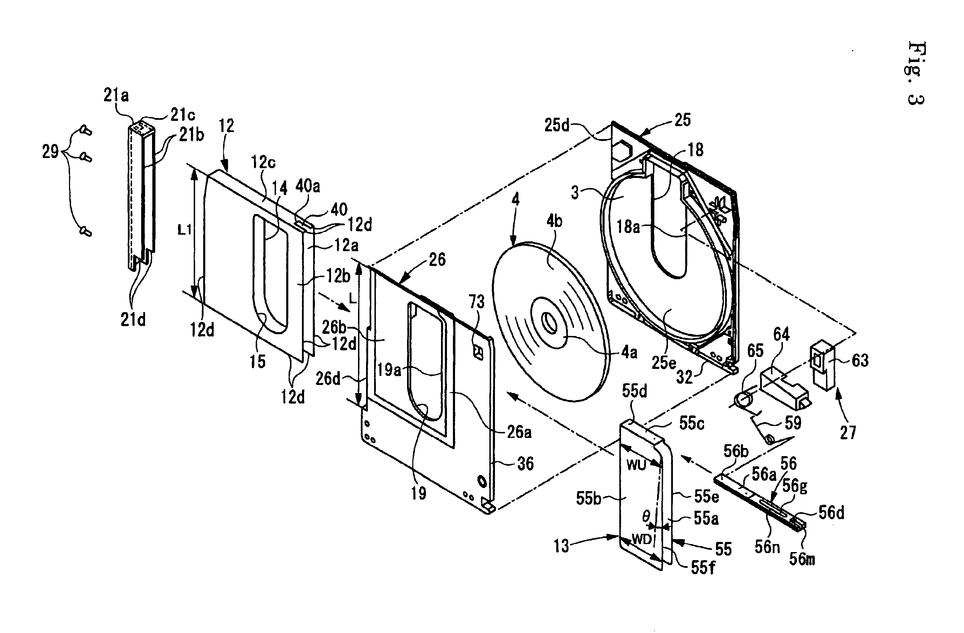

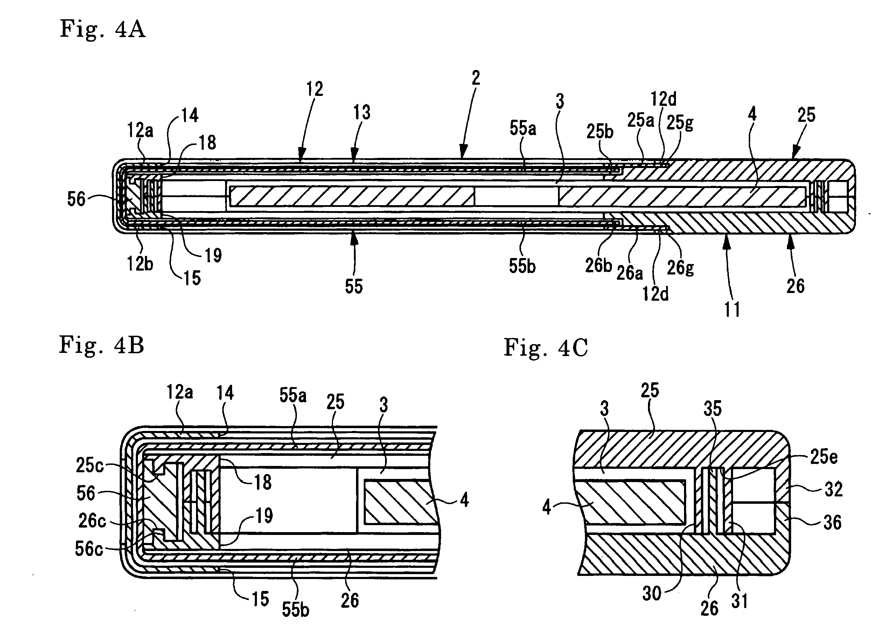

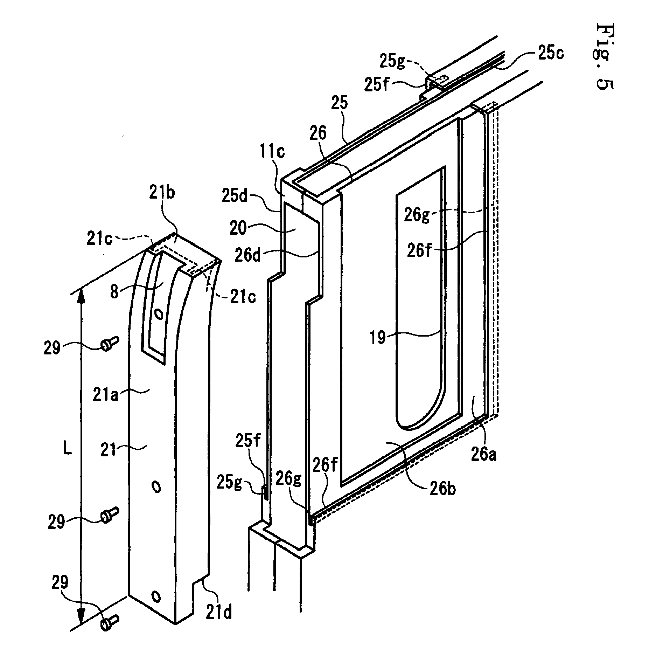

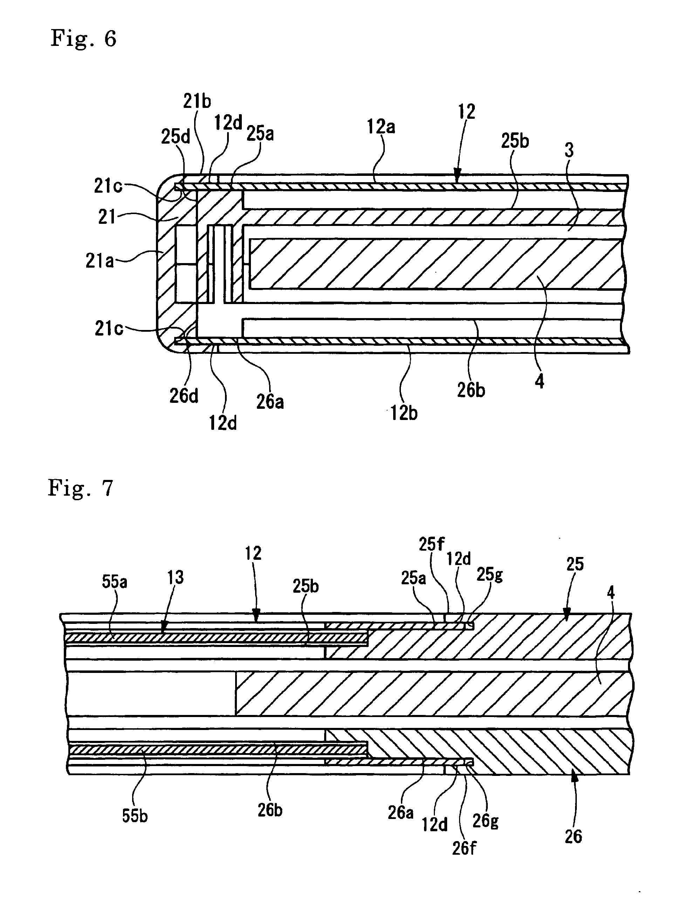

An embodiment of the invention will be described below in detail with reference to the drawings. Fig. 1 is a perspective view of a holographic recording medium cartridge (hereinafter referred to as "cartridge" simply) according to an embodiment of the invention. Fig. 2 is a perspective view showing an opposite surface of the cartridge. Fig. 3 is an exploded perspective view showing the configuration of the cartridge. Figs. 4A to 4C are sectional views taken along the line IV-IV in Fig. 1. That is, Fig. 4A is a sectional view showing the whole of the cartridge; Fig. 4B is an enlarged sectional view showing a front end marginal portion of the cartridge; and Fig. 4C is an enlarged sectional view showing a rear end marginal portion of the cartridge. Fig. 5 is an enlarged exploded perspective view showing important part of the cartridge in a state where a shutter and a light-shield plate have been removed. Fig. 6 is a sectional view taken along the line VI-VI in Fig. 1. Fig. 7 is a sectional view taken along the line VII-VII in Fig. 1.

As shown in Figs. 1 to 3, the cartridge 2 is loaded into an apparatus such as a holographic recording apparatus (which handles the cartridge 2) in a direction of the arrow C. Positioning grooves 7 and 8 are provided in opposite side surfaces of a front end of the cartridge 2 viewed from the direction of loading so that positioning members provided in the apparatus such as a holographic recording apparatus are inserted in the positioning grooves 7 and 8 when the cartridge 2 is loaded into the apparatus.

A photosensitive recording medium (hereinafter referred to as "recording disc") 4 rotatably received in a disc receiving portion 3 of the cartridge 2 is a holographic recording disc which has a hole in its center portion, and holographic recording layers on its opposite surfaces. When, for example, laser light with a wavelength range of from 405 nm (blue) to 532 nm (green) is applied on the holographic recording layers, data can be multilayer-recorded as interference fringes of the laser light. Incidentally, a reinforcing member may be added to the hole portion of the recording disc 4. The cartridge 2 is set in the holographic recording apparatus while either surface A 2a or surface B 2b is turned up in order to perform recording on the opposite recording surfaces of the recording disc 4.

The cartridge 2 has: a cartridge body 11 provided with a disc receiving portion 3; a lid 21 for closing an opening portion 20 formed in a side surface 11c of the cartridge body 11; a light-shield plate 12 attached to the cartridge body 11 so that the outside of the cartridge body 11 is held in the light-shield plate 12; and a shutter 13 interposed between the cartridge body 11 and the light-shield plate 12. Outer openings 14 and 15, which are second openings each substantially shaped like a rectangle, are formed in upper and lower surfaces of the light-shield plate 12. These outer openings 14 and 15 are closed by first and second shutters 55a and 55b when the shutter 13 is located in a closed position.

When the shutter 13 moves toward an opened position in a direction of the arrow D, inner openings 18 and 19 of the same shape as the outer openings 14 and 15 are opened together with the outer openings 14 and 15. The inner openings 18 and 19 are provided in the cartridge body 11 so as to face the outer openings 14 and 15 respectively. As a result, the center portion 4a and recording surface 4b of the recording disc 4 received in the disc receiving portion 3 is exposed to the outside.

The shutter 13 is urged to the closed position by a built-in shutter spring and locked at the closed position by a lock mechanism 27. The lock mechanism 27 can be released as follows. A second lock member 64 provided in a positioning groove 7 so as to protrude outward is pushed into the cartridge 2. In this state, a first lock member 63 exposed through openings 73 and 72 of the surfaces A 2a and B 2b of the cartridge 2 is slid toward the rear end in the cartridge-loading direction. In this manner, the shutter 13 is locked at the closed position by the lock mechanism 27 which cannot be released without two-stage operation. Accordingly, the shutter 13 is prevented from being opened without discretion.

As shown in Fig. 3, the cartridge body 11 has: a first shell 25 substantially shaped like a plate; a second shell 26 joined to the first shell 25; and the lock mechanism 27 interposed between the first shell 25 and the second shell 26 to lock the shutter 13.

For example, the first and second shells 25 and 26 are formed by injection molding of one and the same thermoplastic or similar thermoplastics containing a light-shielding substance and a lubricant as additives. As shown in Fig. 4C which is an enlarged sectional view showing the rear end marginal portion of the cartridge 2, a first light-shield wall 30, a second light-shield wall 31 and a protrusive stripe 32 are provided in the inside of the first shell 25. The first light-shield wall 30 is a protrusive stripe formed with a larger diameter than the outer diameter of the recording disc 4. The second light-shield wall 31 is provided on the outside of the first light-shield wall 30. The protrusive stripe 32 is formed on three sides of the marginal portion except a side surface 25d. An inner opening 18 is provided in the inside of the first light-shield wall 30 to expose the center portion 4a and recording surface 4b of the recording disc 4 to the outside.

A third light-shield wall 35 and a protrusive stripe 36 are provided in the inside of the second shell 26. The third light-shield wall 35 is a protrusive stripe which is formed with a larger diameter than the outer diameter of the recording disc 4 and which is inserted between the first light-shield wall 30 and the second light-shield wall 31 of the first shell 25. The protrusive stripe 36 is formed on three sides of the marginal portion except a side surface 26d. An inner opening 19 is provided in the inside of the third light-shield wall 35 to expose the center portion 4a and recording surface 4b of the recording disc 4 to the outside.

When the first shell 25 is put on the top of the second shell 26 with the recording disc 4 put on the inside of the third light-shield wall 35 of the second shell 26, the third light-shield wall 35 is inserted between the first light-shield wall 30 and the second light-shield wall 31 so that a front end of the third light-shield wall 35 abuts on an inner surface 25a of the first shell 25. The disc receiving portion 3 is formed from these light-shield walls 30, 31 and 35 and the inner surfaces of the first and second shells 25 and 26.

A side wall of the disc receiving portion 3 is provided as a labyrinthian light-shield structure formed complicatedly from the three light-shield walls 30, 31 and 35. For this reason, light or dust is prevented from going into the disc receiving portion 3 even if the light or dust comes from a joint of the first and second shells 25 and 26. Moreover, there is no gap formed in the joint of the first and second shells 25 and 26 because the first and second shells 25 and 26 are fixed to each other firmly by screwing. A front end of the third light-shield wall 35 may be welded to an inner surface 25e of the first shell 25 by means of ultrasonic welding or the like so that light-shielding characteristic can be improved more greatly.

When the first and second shells 25 and 26 are put on each other and joined to each other, an opening portion 20 opened to the outside is formed on a side surface 11c which is formed from side surfaces 25d and 26d where the protrusive stripes 32 and 36 are not provided (see Fig. 5). The opening portion 20 is formed so that the length L of the opening portion 20 is larger than the length L1 of the marginal portion 12d of the light-shield plate 12 located on the opening portion 20 side.

As shown in Figs. 3, 4A-4C, 5, 6 and 7, light-shield plate mounting surfaces 25a and 26a, which are slightly larger than the light-shield plate 12 and offset inward by a depth not smaller than the thickness of the light-shield plate 12, are formed on the outer surfaces of the first and second shells 25 and 26 respectively. The light-shield plate mounting surfaces 25a and 26a are formed so that the opening portion 20 sides of the light-shield plate mounting surfaces 25a and 26a continue to the side surfaces 25d and 26d respectively without any difference in level. Light-shield plate receiving grooves 25g and 26g are formed in three-side marginal portions (inclusive of front end edges in the cartridge 2-loading direction) of the light-shield plate mounting surfaces 25a and 26a except the opening portion 20 sides. When the light-shield plate 12 is mounted onto the light-shield plate mounting surfaces 25a and 26a, the light-shield plate receiving grooves 25g and 26g are fitted to the marginal portion 12d of the light-shield plate 12 to thereby form a labyrinth.

As shown in Figs. 1 to 3 and Figs. 5 and 6, the lid 21 is fitted into the opening portion 20 and tightened by three screws 29 to thereby block the opening portion 20. The lid 21 is a bottomed box substantially shaped like a rectangular parallelepiped having the same length as the length L of the opening portion 20. The lid 21 has a body portion 21a shaped like a rectangular plate, and an approximately U-shaped rib 21b erected from three sides of the front end edge and two side surfaces of the body portion 21a in the direction of loading of the cartridge body 11. The body portion 21a and the rib 21b are formed so as to be integrated with each other. A lid groove portion 21c is formed in the inside of the joint portion between the rib 21b and the body portion 21a. The rib 21b in the lower portion of the lid 21 in the lengthwise direction is reduced in height to thereby form a step portion 21d. When the lid 21 is attached to the opening portion 20, the marginal portion 12d of the light-shield plate 12 is fitted into the lid groove portion 21c to thereby form a labyrinth.

A light-weight strong material such as an aluminum alloy which can obtain light-shielding characteristic, corrosion resistance, decorativeness and processibility is used as the material of the light-shield plate 12. Incidentally, the light-shield plate 12 may be made of a plastic. In this case, a plastic containing a light-shield substance and a lubricant as additives may be used to keep light-shielding characteristic and slidability of the shutter 13.

As shown in Fig. 3, the light-shield plate 12 is made of an aluminum alloy thin plate which is provided with outer openings 14 and 15 and a notch 40 for obtaining the movable range of the shutter 13 and which is bent so as to be approximately U-shaped in sectional view. As a result, the light-shield plate 12 has a first plate portion 12a provided with the outer opening 14, a second plate portion 12b provided with the outer opening 15, and a third plate portion 12c provided with the notch 40 and for connecting the first and second plate portions 12a and 12b to each other.

When the light-shield plate 12 is fitted onto the light-shield plate mounting surfaces 25a and 26a of the cartridge body 11 through a side surface on the opening portion 20 side so that the surfaces B 2b and A 2a of the cartridge body 11 are sandwiched between the first and second plate portions 12a and 12b while the front end of the cartridge body 11 in the loading direction is covered with the third plate portion 12c, the light-shield plate 12 is mounted onto the light-shield plate mounting surfaces 25a and 26a. Then, the lid 21 is screwed to the opening portion 20. The step portion 21d of the lid 21 is attached so as to abut on the opening portion 20-side end portions of the ribs 25f and 26f which form the light-shield plate receiving grooves 25g and 26g. Accordingly, the corner portions of the light-shield plate 12 on the opening portion 20 side are covered so surely that light can be prevented from penetrating from sides.

The marginal portion 12d of the light-shield plate 12 is fitted and fixed into the light-shield plate receiving grooves 25g and 26g and the lid groove portion 21c. As a result, the opening portion 20 is closed by the lid 21 and surely shielded from light by the labyrinth formed from the marginal portion 12d, the light-shield plate receiving grooves 25g and 26g and the lid groove portion 21c. The light-shield plate 12 is fixed in a state where a gap for sliding the shutter 13 is kept between the light-shield plate 12 and the outer surface of the cartridge body 11 (the first and second shells 25 and 26).

Because it is unnecessary to open the U-shaped light-shield plate 12 for fitting the light-shield plate 12 through the side surface on the opening portion 20 side, lowering of light-shielding characteristic can be prevented from being caused by deformation of the light-shield plate 12. Because the light-shield plate 12 is fixed in such a manner that the marginal portion 12d of the light-shield plate 12 is fitted into the light-shield plate receiving grooves 25g and 26g and the lid groove portion 21c, it is unnecessary to screw up the marginal portion 12d. Accordingly, reduction in number of parts and improvement in assembling characteristic can be obtained.

Because the opening portion 20 is covered with the lid 21, the opening portion 20 can be blocked by the lid 21 to keep good light-shielding characteristic even if there is a slight gap between the two shells 25 and 26 which form the cartridge body 11. Because the light-shield plate mounting surfaces 25a and 26a are offset inward by a depth not smaller than the thickness of the light-shield plate 12, the outer surface of the light-shield plate 12 attached to the cartridge body 11 is prevented from protruding from the surface of the cartridge 2.

As shown in Fig. 3, the shutter 13 has: a shutter member 55 made of a light-shield thin plate bent so as to be approximately U-shaped; and a long and narrow plate-like slide member 56 attached to the shutter member 55. The shutter 13 is urged to close the inner openings 18 and 19 by a shutter spring 59. For example, the shutter spring 59 is made of a torsion coiled spring having two ends fixed to the slide member 56 and the inner surface of the first shell 25 respectively.

For example, the shutter member 55 is made of an aluminum alloy for the same reason as the light-shield plate 12. Incidentally, the shutter member 55 may be made of a plastic. In this case, a plastic containing a light-shield substance and a lubricant as additives may be also used preferably in order to keep light-shielding characteristic and slidability. The slide member 56 is made of a plastic containing a light-shield substance and a lubricant as additives.

The shutter member 55 has: a first shutter 55a inserted between the outer surface of the first shell 25 and the first plate portion 12a of the light-shield plate 12; a second shutter 55b inserted between the outer surface of the second shell 26 and the second plate portion 12b of the light-shield plate 12; and a connection portion 55c which connects the first and second shutters 55a and 55b to each other and to which the slide member 56 is attached.

The width of the first and second shutters 55a and 55b is set so that the lower width WL is larger than the upper width WU. Accordingly, edge portions 55e and 55f on the shutter-closing direction side of the first and second shutters 55a and 55b are inclined at an angle θ with respect to a line perpendicular to the connection portion 55c. On the other hand, marginal portions 18a and 19a on the shutter-closing direction side of the inner openings 18 and 19 of the first and second shells 25 and 26 are formed without any inclination.

Accordingly, when the shutter 13 is moved in the closing direction, the edge portions 55e and 55f on the shutter-closing direction side of the shutter 13 intersect the marginal portions 18a and 19a on the shutter-closing direction side of the inner openings 18 and 19 at one point. This intersection moves from one end side to the other end side of the edge portions 55e and 55f while guided by the marginal portions 18a and 19a with the closing operation of the shutter 13. That is, it is possible to avoid a phenomenon in which the edge portions 55e and 55f abut on the marginal portions 18a and 19a to prevent the movement of the shutter 13 when the shutter 13 is closed and which may occur in the case where the edge portions 55e and 55f of the shutter 13 are formed in parallel with the marginal portions 18a and 19a of the inner openings 18 and 19. The shutter 13 can be closed smoothly.

Shutter slide surfaces 25b and 26b offset inward by a depth not smaller than the thickness of the shutter member 55 are formed in the inside of the light-shield plate mounting surfaces 25a and 26a on the outer surfaces of the first and second shells 25 and 26. The shutter 13 is mounted onto the shutter slide surfaces 25b and 26b. Accordingly, the shutter 13 can move smoothly between the cartridge body 11 and the light-shield plate 12, so that swarf or the like can be prevented from being generated on the basis of the movement of the shutter 13. Incidentally, the shutter slide surfaces 25b and 26b may be roughened in order to diffuse incident light. Similarly, the inner surface of the light-shield plate 12 and the inner and outer surfaces of the shutter 13 may be roughened.

The slide member 56 is slidably put between the first shell 25 and the second shell 26 so that the front surface 56g in the cartridge 2-loading direction is exposed from the loading-direction front end surface of the cartridge body 11. A mount surface 56a mounted onto the inner surface of the connection portion 55c of the shutter member 55 is provided at an end portion of the front surface 56g of the slide member 56. For example, two pins 56b are formed on the mount surface 56a so as to be integrated with the mount surface 56a. The two pins 56b are inserted in two holes 55d provided in the connection portion 55c and front ends of the two pins 56b are squashed thermally to thereby fix the shutter member 55 and the slide member 56 to each other. Incidentally, an adhesive agent, a double-side adhesive tape or the like may be used for this fixation or any kind of welding may be used when the shutter member 55 is made of a plastic. Alternatively, screwing may be used.

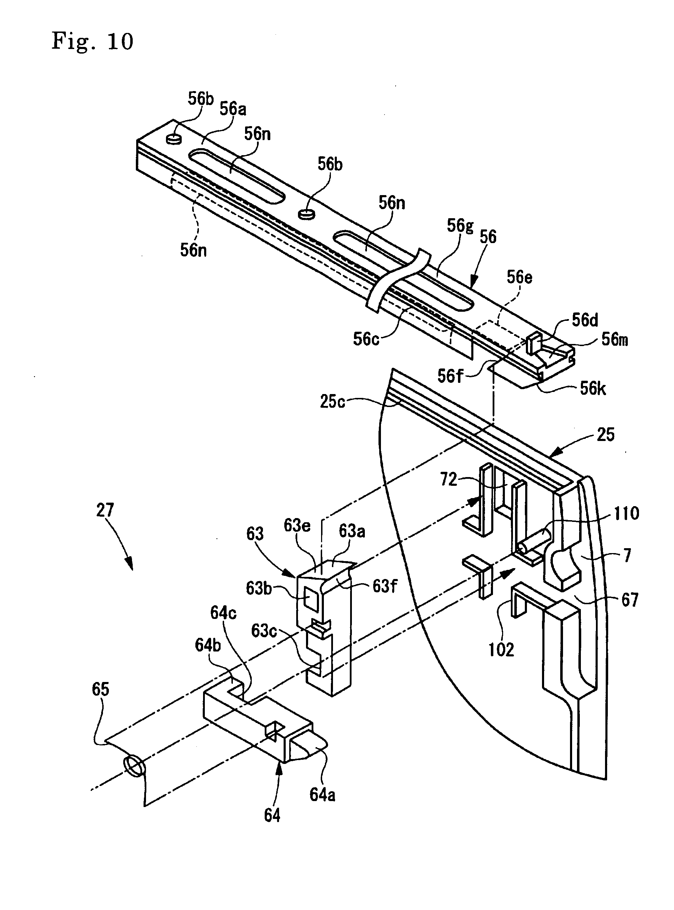

As shown in Fig. 4B and 10, a groove 56c along the lengthwise direction is formed in a side surface of the slide member 56. The protrusive stripes 25c and 26c provided on the inner surfaces of the first and second shells 25 and 26 on the loading-direction front end side are inserted in the groove 56c. The groove 56c and the protrusive stripes 25c and 26c allow the slide member 56 to slide without removal from the cartridge body 11.

An approximately V-shaped fitting groove 56m narrowed gradually from the end surface to the center is provided at an end portion of the front surface 56g of the slide member 56 in the shutter-closing direction. A stopper portion 56d, which is operated when the shutter 13 is opened, is formed on the deep side of the fitting groove 56m so that the stopper portion 56d protrudes ahead in the cartridge 2-inserting direction with respect to the front surface 56g of the slide member 56. Hollow portions 56n are provided in upper and lower surfaces of the slide member 56. Accordingly, even if the slide member 56 is made thick, protrusion of the stopper portion 56d from the front surface 56g of the slide member 56 can be suppressed so that the height of the stopper portion 56d can be set as a height enough to fit the fitting groove 56m to a shutter opening/closing roller (not shown).

The stopper portion 56d is not hidden behind the third plate portion 12c of the light-shield plate 12 but exposed to the outside because the slide member 56 is provided so as to extend in the shutter-closing direction with respect to the shutter member 55. The notch 40 of the third plate portion 12c of the light-shield plate 12 is provided to avoid interference with the stopper portion 56d at the time of movement of the shutter 13 to the opened position. The formation of the notch 40 allows the moving distance of the shutter 13 to enlarge in the case where the inner openings 18 and 19 cannot be opened because of shortage of the moving distance of the shutter 13.

From the point of view of light-shielding characteristic, it is preferable that the notch 40 is not provided. When the notch 40 is provided, it is necessary to consider no hindrance to light-shielding characteristic in such a manner that the end edge 40a of the notch 40 is formed so as to be separated in the shutter-closing direction from the marginal portions 18a and 19a of the inner openings 18 and 19 as sufficiently as possible.

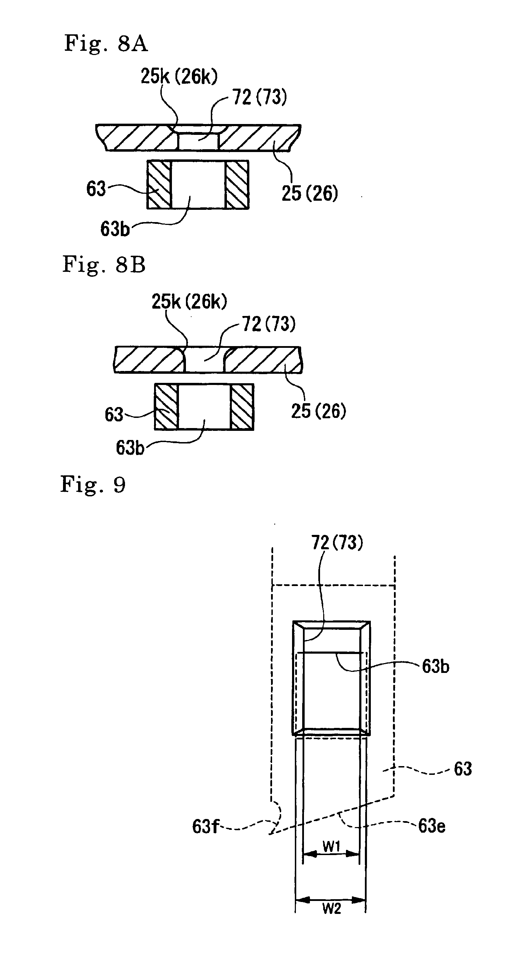

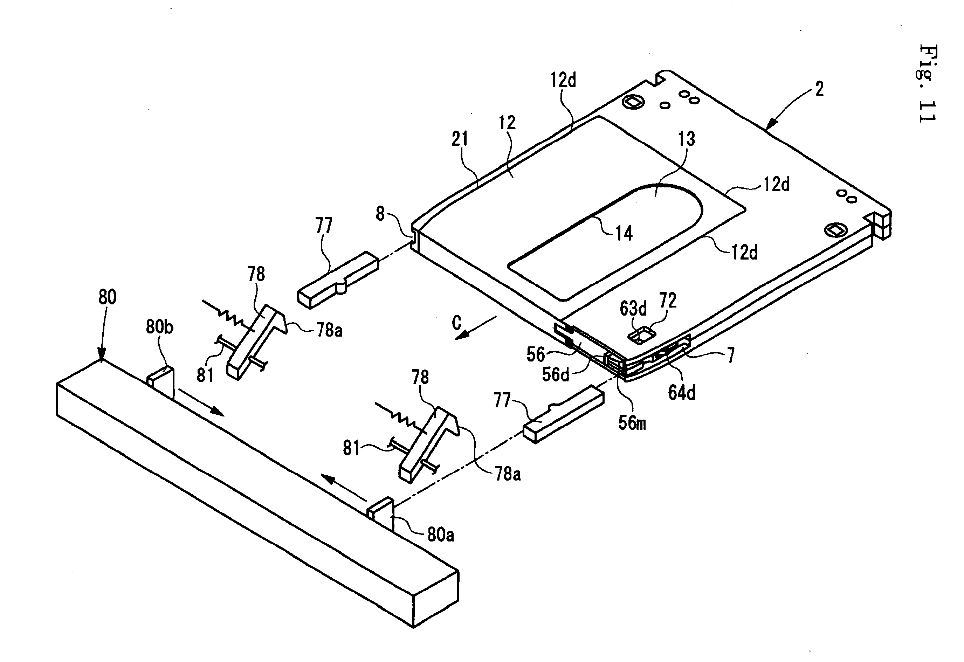

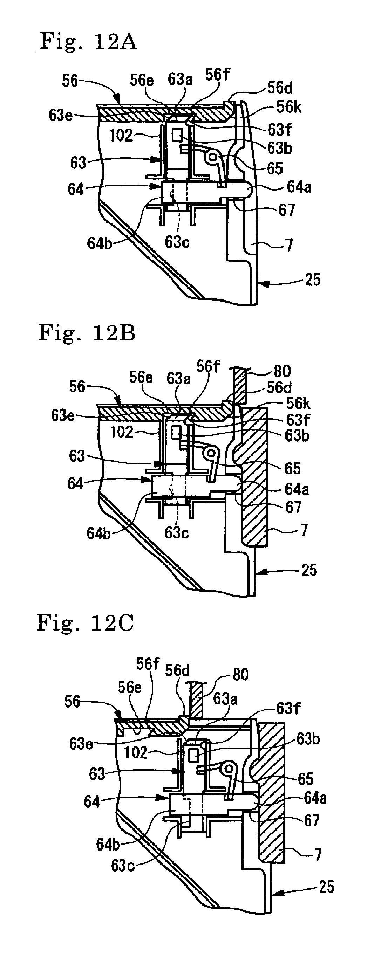

Next, the lock mechanism will be described with reference to Figs. 8A-8B, 9, 10, 11 and 12A-12C. Figs. 8A and 8B are sectional views taken along the line VIII-VIII in Fig. 1. Fig. 9 is a plan view from the arrow IX in Fig. 1. Fig. 10 is an exploded perspective view showing the configuration of the lock mechanism. Fig. 11 is an exploded perspective view showing an example of various mechanisms for opening the shutter. Figs. 12A to 12C are views for explaining the operation of the lock mechanism.

As shown in Fig. 10, the slide member 56 has a recess 56e which is formed so as to be adjacent to the stopper portion 56d. A fitting inclined surface (fitting portion) 56f inclined in the shutter-closing direction which approaching the front gradually in the cartridge-loading direction is formed on the right of the recess 56e in Fig. 10. A guide inclined surface 56k chamfered substantially in parallel with the fitting inclined surface 56f is formed in the corner portion between the right end surface and lower surface of the slide member 56 in Fig. 10.

The lock mechanism 27 has: a first lock member 63 for locking the shutter at the closed position; a second lock member 64 for locking the movement of the first lock member 63; and a lock spring 65 for urging the first lock member 63 upward in Fig. 10 and urging the second lock member 64 rightward in Fig. 10.

The first lock member 63 is put in a slide frame 102 provided in the first shell 25 so that the first lock member 63 can slide vertically. A lock piece 63a, a rectangular operation hole 63b and a fitting groove 63c are provided at a front end of the first lock member 63. The lock piece 63a locks the shutter 13 by engaging with the recess 56e of the slide member 56. The rectangular operation hole 63b is exposed to the outside through the opening 72. The fitting groove 63c is formed in a side surface of the first lock member 63 and fitted to the second lock member 64.

The second lock member 64 is put in the slide frame 102 so as to be piled on the first lock member 63 so that the second lock member 64 can slide horizontally. The second lock member 64 has a front end 64a substantially shaped like a triangle and protruded to the outside through a notch 67 provided in the positioning groove 7. The second lock member 64 further has a limiting protrusion 64b and a groove 64c provided at its rear end. The first lock member 63 is fitted into the groove 64c so that the first lock member 63 can move vertically.

An inclined surface 63e for promoting engagement with the recess 56e at the time of movement of the shutter from the opened position to the closed position is formed as the top surface of the lock piece 63a of the first lock member 63 so as to be substantially in parallel with the fitting inclined surface 56f of the slide member 56. A hook portion 63f, which is an inclined surface substantially parallel with the fitting inclined surface 56f of the recess 56e, is formed on the right of the lock piece 63a in Fig. 10 so that the fitting inclined surface 56f engages with the hook portion 63f to prevent the movement of the slide member 56 surely when the slide member 56 moves left (in the shutter-opening direction) in Fig. 10. The first and second lock members 63 and 64 are urged upward and rightward respectively by the lock spring 65 mounted on the pin 110.

As shown in Fig. 11, for example, a pair of positioning members 77 and 77, a pair of unlock arms 78 and 78 for operating the first lock member 63, and a shutter slide mechanism 80 for sliding the shutter 13 between the opened position and the closed position are incorporated in a holographic recording apparatus (drive device) into which the cartridge 2 is loaded in use. The pair of positioning members 77 and 77 engage with the positioning grooves 7 and 8 on the opposite sides of the loaded cartridge 2, so that the cartridge 2 is positioned in the cartridge 2-inserting direction and in a direction perpendicular to the cartridge 2-inserting direction.

Each of the unlock arms 78 and 78 is an approximately L-shaped member which is disposed so as to be rotatable on a shaft 81 fitted at an end of the unlock arm. An inclined surface 78a is formed in a protrusion portion at a front end of each unlock arm 78. When the unlock arms 78 rotate and the protrusion portion of the front end of one of the unlock arms 78 is inserted in the rectangular operation hole 63b of the first lock member 63 through the opening 72 of the cartridge 2, the inclined surface 78a presses the cartridge-inserting direction rear surface of the rectangular operation hole 63b to move the first lock member 63 in a direction (downward in Fig. 10) opposite to the loading direction. Incidentally, recording can be made on both sides of the recording disc 4. The cartridge 2 can be set in the apparatus while either surface A 2a or B 2b is turned up. When the loaded side is changed, the lock mechanism 27 is inverted with respect to left and right. Therefore, the unlock arm 78 for inverted loading is provided so that the unlock arm 78 can engage with the rectangular operation hole 63b even if the cartridge 2 is loaded in an inverted manner.

The shutter slide mechanism 80 has an operation piece 80a abutting on the outside of the stopper portion 56d of the slide member 56, and a slide mechanism for sliding the operation piece 80a in the shutter 13-sliding direction. The shutter slide mechanism 80 further has another operation piece 80b which is used when the cartridge 2 is inserted in an inverted manner. The operation pieces 80a and 80b move in directions of the arrows simultaneously.

As shown in Figs. 8A and 8B, the opening 72 (73) of the cartridge body 11 for exposing the rectangular operation hole 63b of the first lock member 63 to the outside is provided so that the outer angular portion of the opening 72 (73) is chamfered or R-chamfered to thereby form a chamfered portion 25k (26k). As shown in Fig. 9, the width W2 of the rectangular operation hole 63b is set to be larger than the width W1 of the opening 72 (73). Accordingly, when the unlock arm 78 is inserted in the opening 72 (73), the unlock arm 78 is guided by the chamfered portion 25k (26k) so that the unlock arm 78 can be inserted smoothly. Moreover, the front end portion (especially opposite side portions) of the unlock arm 78 is inserted without interference with the edge portions of the rectangular operation hole 63b, so that the front end portion of the unlock arm 78 is fitted into the rectangular operation hole 63b.

As shown in Fig. 12A, when the cartridge is not used, the front end 64a of the second lock member 64 urged by the lock spring 65 is protruded from the notch 67 into the positioning groove 7. On this occasion, the limiting protrusion 64b of the second lock member 64 is fitted into the fitting groove 63c of the first lock member 63 to prevent the first lock member 63 from sliding down.

As shown in Fig. 12B, when the cartridge is loaded into the holographic recording apparatus, the positioning member 77 inserted in the positioning groove 7 presses the front end 64a to thereby press the second lock member 64 into the cartridge and remove the limiting protrusion 64b from the fitting groove 63c. Accordingly, the first lock member 63 can slide down.

As shown in Fig. 12C, when the unlock arm 78 provided in the apparatus is inserted in the rectangular operation hole 63b of the first lock member 63, the inclined surface 78a of the unlock arm 78 presses the first lock member 63 to slide down the first lock member 63 and remove the lock piece 63a from the recess 56e of the slide member 56. As a result, the shutter can be moved. The operation member 80 of the shutter slide mechanism presses the stopper portion 56d of the slide member 56 to thereby open the shutter.

The lock mechanism 27 according to this embodiment can surely prevent the shutter 13 from being opened because the fitting inclined surface 56f and the hook portion 63f are inclined so that they are fitted to each other to make the fitting force stronger to thereby make the engagement firmer when the slide member 56 moves in the shutter 13-opening direction. Moreover, because two-stage operations are required for unlocking the shutter 13, the shutter 13 can be prevented from being opened without discretion.

As described above, in accordance with the photosensitive recording medium cartridge 2 according to the invention, while the opening portion 20 is provided in the side surface 11c of the cartridge body 11, the light-shield plate mounting surfaces 25a and 26a having the light-shield plate receiving grooves 25g and 26g are formed on the outer surface of the cartridge 11. After the light-shield plate 12 is inserted from a side surface on the opening portion 20 side and mounted onto the light-shield plate mounting surfaces 25a and 26a, the lid 21 is attached to the opening portion 20. On this occasion, the marginal portion 12d of the light-shield plate 12 is fitted and fixed into the light-shield plate receiving grooves 25g and 26g of the cartridge body 11 and the lid groove portion 21c provided in the lid 21. Accordingly, it is possible to provide the photosensitive recording medium cartridge 2 in which: light-shielding characteristic is improved; and the number of screwing points is reduced so that the number of parts can be reduced while the number of assembling steps can be reduced.

Although the above description has been made upon a cartridge for receiving a double-side recording disc, the invention may be applied to a cartridge corresponding to a one-side recording disc. In this case, an opening is formed in only one of opposite surfaces so as to be opened/closed by a shutter. Although the above description has been made upon a cartridge for receiving a holographic recording medium, the invention may be applied to a cartridge for receiving another photosensitive recording medium.

This application is based on Japanese Patent application JP 2006-13000, filed January 20, 2006, the entire content of which is hereby incorporated by reference, the same as if set forth at length.

## Claims

1. A cartridge comprising:
a photosensitive recording medium;
a cartridge body including a disc receiving portion for receiving the photosensitive recording medium rotatably, an opening portion formed in a side surface in a direction of insertion, a light-shield plate mounting surface provided on an outer surface, and an inner opening for exposing a center and a recording surface of the photosensitive recording medium to an outside;
a light-shield plate inserted from the side surface of the cartridge body on the opening portion side and mounted onto the light-shield plate mounting surface; and
a lid which is fixed to the side surface of the cartridge body so as to close the opening portion and fix the light-shield plate to the cartridge body.

2. The cartridge according to claim 1, wherein:
the light-shield plate mounting surface has an abutment portion on which a marginal portion of the light-shield plate abuts, and a light-shield plate receiving groove provided in the abutment portion so that the marginal portion is fitted into the light-shield plate receiving groove;
the lid has a lid groove portion into which the marginal portion of the light-shield plate disposed on the opening portion side is fitted; and
the light-shield plate is fixed in such a manner that the marginal portion of the light-shield plate is fitted into the light-shield plate receiving groove and the lid groove portion.

3. The cartridge according to claim 1, wherein the lid is formed so as to be longer than the marginal portion on the opening portion side.

4. The cartridge according to claim 1, wherein the light-shield plate mounting surface has a shutter slide surface which is offset inward so that a shutter is movably disposed between a closed position for closing the inner opening and an opened position for opening the inner opening.

5. The cartridge according to claim 1, wherein the photosensitive recording medium is a holographic recording medium.
